# EUROPEAN PATENT APPLICATION

(11) **EP 4 286 058 A1**
(43) Date of publication of application: **06.12.2023**
(21) Application number: 22745915.3
(22) Date of filing: 26.01.2022
(51) Int. Cl.: B05B 9/04, B05B 17/00, B65D 83/14

(54) **EJECTION DEVICE AND EJECTION METHOD**

(30) Priority: 26.01.2021 JP 2021010667
(71) Applicant: Toyo Seikan Co., Ltd., Tokyo 141-8640 (JP)
(72) Inventor: KOMINAMI, Atsushi, Yokohama-shi, Kanagawa 230-0001 (JP); ARAKI, Souji, Yokohama-shi, Kanagawa 230-0001 (JP)
(74) Representative: Pfenning, Meinig & Partner mbB
(86) International application number: PCT/JP2022/002884
(87) International publication number: WO 2022/163696

(57) **Abstract**

To provide a discharge apparatus of aerosol containers, the discharge apparatus including a first supply unit to which a first content of a first aerosol container is supplied, a discharge unit which discharges a second content of a second aerosol container different from the first aerosol container, and a second supply unit into which the second content is injected and which is connected between the first supply unit and the discharge unit. The second content injected into the second supply unit is discharged from the discharge unit by making an internal pressure of the first supply unit higher than an internal pressure of the second supply unit with a supply of the first content.

## Description

### TECHNICAL FIELD

The present invention relates to a discharge apparatus and a discharge method.

### BACKGROUND

Conventionally, an aerosol container that contains a content has been known (for example, see Patent Document 1).

Patent Document 1: Japanese Patent Application Publication No. 2019-214417 PROBLEM TO BE SOLVED

A conventional aerosol container encloses contents that are main objects of discharges such as a propellant consisting of liquefied gas or compressed gas, and a coating material or an insecticide, in a same container. The aerosol container cannot keep a discharge pressure constant because a pressure inside the container reduces due to a decrease of the liquefied gas or an expansion of the compressed gas in accordance with consumption of the contents by a discharge. In addition, there has been an issue that, if a gas component of the propellant is dissolved in the contents, when the contents are discharged from the aerosol container, the contents are nebulized due to vaporization of the liquefied gas component, and since the contents scatter during a flight, a flying distance and a hitting accuracy are worsened.

### GENERAL DISCLOSURE

A first aspect of the present invention provides a discharge apparatus of aerosol containers, the discharge apparatus including a first supply unit to which a first content of a first aerosol container is supplied, a discharge unit which discharges a second content of a second aerosol container different from the first aerosol container, and a second supply unit into which the second content is injected and which is connected between the first supply unit and the discharge unit. The second content injected into the second supply unit is discharged from the discharge unit by making an internal pressure of the first supply unit higher than an internal pressure of the second supply unit with a supply of the first content.

A second aspect of the present invention provides a discharge method including providing a first aerosol container which contains a first content and which is connected with a first supply unit, providing a second aerosol container which contains a second content different from the first content and which is connected with a second supply unit provided between the first supply unit and the discharge unit, injecting the second content into the second supply unit, supplying the first content to the first supply unit, and discharging the second content injected into the second supply unit from the discharge unit by making an internal pressure of the first supply unit higher than an internal pressure of the second supply unit with the first content.

The summary clause does not necessarily describe all necessary features of the embodiments of the present invention. The present invention may also be a sub-combination of the features described above.

### BRIEF DESCRIPTION OF THE DRAWINGS

Fig. 1A illustrates an example of a configuration of a discharge apparatus 100.
Fig. 1B is an example of a flowchart showing operations of the discharge apparatus 100.
Fig. 2A illustrates an example of operations of the discharge apparatus 100 in step S200.
Fig. 2B illustrates an example of operations of the discharge apparatus 100 in step S400.
Fig. 3A illustrates a modification example of the configuration of the discharge apparatus 100.
Fig. 3B illustrates a modification example of the configuration of the discharge apparatus 100.
Fig. 3C illustrates a modification example of the configuration of the discharge apparatus 100.
Fig. 4 illustrates a modification example of the configuration of the discharge apparatus 100.
Fig. 5A illustrates a modification example of the configuration of the discharge apparatus 100.
Fig. 5B illustrates a modification example of the configuration of the discharge apparatus 100.
Fig. 6A is a diagram for describing a driving state of the discharge apparatus 100.
Fig. 6B is a timing diagram showing a driving state of the discharge apparatus 100.
Fig. 7 illustrates an example of a configuration of an unmanned aircraft 200 to which the discharge apparatus 100 is mounted.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

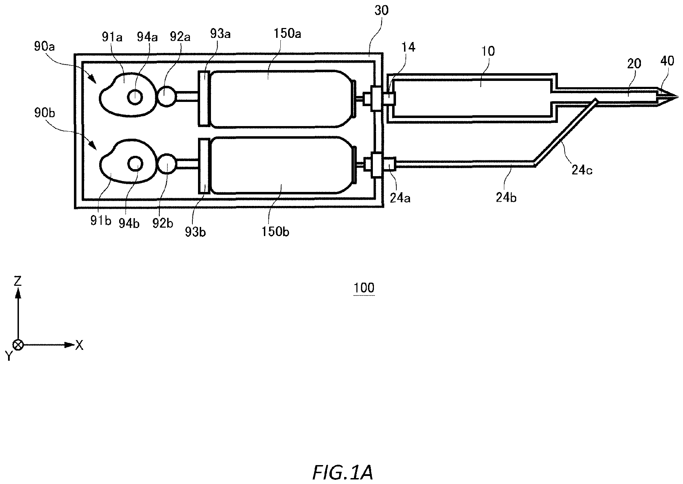

Fig. 1A illustrates an example of a configuration of a discharge apparatus 100. The discharge apparatus 100 includes a first supply unit 10, a second supply unit 20, a containing unit 30, and a discharge unit 40. The discharge apparatus 100 discharges contents of an aerosol container 150 contained in the containing unit 30. The containing unit 30 of the present example contains two aerosol containers, which are an aerosol container 150a and an aerosol container 150b.

The aerosol container 150a is filled with a first content 12, and it functions as a pressure source. The first content 12 may be liquefied gas or compressed gas. The aerosol container 150a is an example of a first aerosol container which is filled with the first content 12. The aerosol container 150a and the aerosol container 150b of the present example are aerosol cans made of metal, but they may be plastic containers having pressure resistance. The first content 12 and a second content 22 will be described below.

The aerosol container 150b is an example of a second aerosol container which is filled with the second content 22 different from the first content 12. The aerosol container 150b ejects the second content 22 such as liquid, with a gas pressure of the liquefied gas or the compressed gas filled inside. A propellant of the aerosol container 150b may be liquefied gas that does not dissolve in the second content 22. In addition, the aerosol container 150b may have a Bag on Valve (BOV) system in which a content is contained inside an inner bag, and a propellant is contained outside the inner bag. For example, the aerosol container 150b contains an alternative for chlorofluorocarbon as the propellant, and a coating material as the second content 22.

Note that, known gas that is generally used for aerosol products can be used as propellants of the first content 12 and the second content 22. The liquefied gas is, for example, propane, butane, pentane, or liquefied petroleum gas including these, dimethyl ether, hydrofluoroolefin, hydrofluorocarbon, or the like, and a plurality of types of these may be used in mixture. In addition, the compressed gas is, for example, nitrogen, carbonic acid gas, compressed air, oxygen, helium, nitrous oxide, or the like, and a plurality of types of these may be used in mixture.

The first supply unit 10 functions as a vaporization chamber for vaporizing the first content 12 supplied from the aerosol container 150a. The first supply unit 10 has a volume that is large enough to vaporize the first content 12. An internal pressure of the first supply unit 10 is raised due to vaporization of the first content 12. The shape of the first supply unit 10 of the present example is a cylindrical shape, but is not limited thereto. The discharge apparatus 100 may include a plurality of the first supply units 10. The plurality of the first supply units 10 may be connected to one aerosol container 150a. The surface area of the first supply unit 10 is increased by providing the plurality of the first supply units 10, and since heat exchange is facilitated, vaporization of the first content 12 is facilitated.

A first coupling part 14 couples the aerosol container 150a and the first supply unit 10. The first coupling part 14 of the present example penetrates the containing unit 30, and couples an inside and an outside of the containing unit 30. Note that, the shape of the first coupling part 14 is not limited to the present example as long as it couples the aerosol container 150a and the first supply unit 10.

The second supply unit 20 is connected to the aerosol container 150b. The second content 22 is injected into the second supply unit 20. In addition, the second supply unit 20 is connected between the first supply unit 10 and the discharge unit 40. The second content 22 injected into the second supply unit 20 is discharged from the discharge unit 40 with the first content 12 vaporized in the first supply unit 10. The shape of the second supply unit 20 of the present example is a cylindrical shape, but is not limited thereto. The discharge apparatus 100 may include a plurality of the second supply units 20.

A second coupling part 24 couples the aerosol container 150b and the second supply unit 20. The second coupling part 24 injects the second content 22 into the second supply unit 20 from the first supply unit 10 side to the discharge unit 40 side of the second supply unit 20. The discharge apparatus 100 may include a plurality of the second coupling parts 24. The second coupling part 24 of the present example includes a second coupling part 24a, a second coupling part 24b, and a second coupling part 24c which are coupled to one another.

The second coupling part 24a penetrates the containing unit 30, and couples an inside and an outside of the containing unit 30. The second coupling part 24b is provided so as to straightly extend from the second coupling part 24a. The second coupling part 24c is provided so as to extend from the second coupling part 24b toward an inside of the second supply unit 20. The second coupling part 24c may be coupled, in the second supply unit 20, closer to the discharge unit 40 than the first supply unit 10. In addition, the second coupling part 24c may be coupled to the second supply unit 20 so as to form an acute angle, such that the second content 22 is injected into the discharge unit 40 side. In this way, a backflow of the second content 22 to the first supply unit 10 can be avoided.

The discharge unit 40 discharges the second content 22 of the aerosol container 150b. The discharge unit 40 is connected to both the aerosol container 150a and the aerosol container 150b. The discharge unit 40 discharges the second content 22 with a pressure of the first content 12. The discharge unit 40 is an exemplary nozzle for discharging the contents. The discharge unit 40 has a discharge port for discharging the contents in the aerosol container 150.

The shapes of the first supply unit 10 and the second supply unit 20 may be appropriately changed according to the contents of the aerosol container 150 and required characteristics of the discharge apparatus 100. As an example, an internal volume of the first supply unit 10 may be greater than an internal volume of the second supply unit 20. By making the internal volume of the first supply unit 10 greater, vaporization of the first content 12 discharged from the aerosol container 150a is facilitated. A cross-sectional area of the first supply unit 10 in a YZ plane may be made larger, or a length in the X-axis direction may be made longer.

The cross-sectional area of the first supply unit 10 may be larger than the cross-sectional area of the second supply unit 20. By making the cross-sectional area of the first supply unit 10 larger, vaporization of the first content 12 discharged from the aerosol container 150a is facilitated. In addition, by making the cross-sectional area of the second supply unit 20 smaller, the discharge of the second content 22 is facilitated with an internal pressure from the first supply unit 10. As an example, by making the cross-sectional area of the second supply unit 20 smaller, generation of an air bubble can be prevented when supplying the second content 22 to the second supply unit, and a smooth discharge is enabled.

A discharge drive unit 90 supplies drive force for discharging the contents from the aerosol container 150. The discharge drive unit 90 of the present example generates drive force from the bottom side to the stem side of the aerosol container 150 (that is, from the negative side to the positive side in the X-axis direction). The discharge drive unit 90 of the present example is contained in the containing unit 30. The discharge drive unit 90 has a cam 91, a cam follower 92, a movable part 93, and a cam coupling part 94.

A discharge drive unit 90a discharges the first content 12 from the aerosol container 150a. The discharge drive unit 90a is an example of a first discharge drive unit. The discharge drive unit 90a of the present example has a cam 91a, a cam follower 92a, a movable part 93a, and a cam coupling part 94a.

A discharge drive unit 90b discharges the second content 22 from the aerosol container 150b. The discharge drive unit 90b is an example of a second discharge drive unit. The discharge drive unit 90b has a cam 91b, a cam follower 92b, a movable part 93b, and a cam coupling part 94b.

The discharge drive unit 90a and the discharge drive unit 90b may be driven independently. As an example, the discharge drive unit 90a and the discharge drive unit 90b discharge the contents at a different timing from each other. For example, in a period when the first content 12 is discharged from the aerosol container 150a by the discharge drive unit 90a, the second content 22 may not be discharged from the aerosol container 150b by the discharge drive unit 90b. On the other hand, in a period when the first content 12 is not discharged from the aerosol container 150a by the discharge drive unit 90a, the second content 22 may be discharged from the aerosol container 150b by the discharge drive unit 90b.

In addition, the discharge drive unit 90a may discharge the first content 12, after the discharge drive unit 90b has discharged the second content 22. Discharges by the aerosol container 150a and the aerosol container 150b may be repeated. Furthermore, periods of the discharges by the aerosol container 150a and the aerosol container 150b may overlap with each other.

Note that, the discharge drive unit 90a and the discharge drive unit 90b may have some configurations in common. The discharge drive unit 90a and the discharge drive unit 90b may include the movable part 93 that is common, or may include the cam coupling part 94 that is common.

The cam 91 is rotationally driven by a drive source such as a motor that is coupled to the cam coupling part 94. The cam 91 has a structure having a varying distance from the center of rotation to the outer circumference. The cam 91 contacts the cam follower 92 on the outer circumference. With a change in the position of the cam follower 92 according to the shape of the cam 91, opening and closing of a valve of the aerosol container 150 can be controlled. Note that, a shape of the cam 91 of the present example is shown in an exaggerated manner.

The cam follower 92 is provided between the cam 91 and the movable part 93. The cam follower 92 is connected to the cam 91 and the movable part 93, and transmits a rotational movement of the cam 91 to the movable part 93 as a linear movement. The cam follower 92 linearly moves, according to a difference in distance from the center of rotation to the outer circumference of the cam 91.

The movable part 93 is provided in contact with a bottom surface of the aerosol container 150, and controls opening and closing of the valve of the aerosol container 150. The movable part 93 moves forward and backward in the X-axis direction by the cam follower 92. For example, when a distance between the center of rotation of the cam 91 and a contact area of the cam 91 on which the cam follower 92 abuts is short, the movable part 93 moves backward with respect to the aerosol container 150, and the valve of the aerosol container 150 is accordingly closed. On the other hand, when the distance between the center of rotation of the cam 91 and the contact area of the cam 91 on which the cam follower 92 abuts is long, the movable part 93 moves forward with respect to the aerosol container 150, and the valve of the aerosol container 150 is accordingly opened.

The cam coupling part 94 is coupled to the cam 91, and rotates the cam 91 in a predetermined direction. The discharge apparatus 100 of the present example includes the cam coupling part 94a coupled to the cam 91a and the cam coupling part 94b coupled to the cam 91b. The cam 91a and the cam 91b may be cooperatively driven at a predetermined timing by being coupled to the cam coupling part 94 that is common.

Note that, the discharge drive unit 90 has a configuration in which a rotational movement of the motor is converted into a linear movement by a cam mechanism, but it is not limited to the cam mechanism. For example, the mechanism of the discharge drive unit 90 may be any mechanism that converts the rotational movement of the motor into the linear movement, such as a screw feeding mechanism or a rack and pinion. In addition, as the drive source, a linear motor for linear drive, an air cylinder, an electromagnetic solenoid, or the like may be provided instead of the rotary motor.

The aerosol container 150a, which is the pressure source, and the aerosol container 150b, which is the liquid source side, are separately mounted on the discharge apparatus 100 of the present example. Furthermore, in the discharge apparatus 100, the second content 22 injected into the second supply unit 20 is discharged from the discharge unit 40 by making an internal pressure of the first supply unit 10 higher than an internal pressure of the second supply unit 20 with a supply of the first content 12.

In this way, the discharge apparatus 100 can exchange each of the aerosol container 150a and the aerosol container 150b. That is, it is possible to individually exchange only the aerosol container having a little remaining amount. For example, since the aerosol container 150a, which is the pressure source, can be exchanged in accordance with consumption, it becomes easier to maintain a constant pressure at the time of the discharge. Furthermore, since the discharge apparatus 100 of the present example does not have to set a high pressure for the aerosol container 150b, which is the liquid source side, a propellant to be filled inside the aerosol container 150b can be reduced, and a filling amount of the second content 22 can be increased.

In addition, regarding the discharge apparatus 100, even when the second content 22 is a substance that is compatible with liquefied gas, since the first content 12 contacts the second content 22 after being vaporized, dissolution to the second content 22 will be extremely limited, and a change in a physical property of the second content 22 can be suppressed. Furthermore, when liquefied gas is dissolved in the second content 22, since liquefied gas rapidly vaporizes under atmospheric pressure, the second content 22 will be nebulized. However, in the discharge apparatus 100 of the present example, since nebulization is avoided and the second content 22 is discharged while maintaining a liquid state, a flying distance of the second content 22 can be extended.

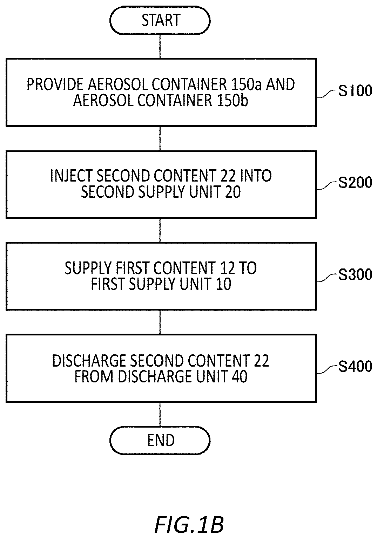

Fig. 1B is an example of a flowchart showing operations of the discharge apparatus 100. In step S100, the aerosol container 150a and the aerosol container 150b are provided. In step S200, the second content 22 is injected into the second supply unit 20.

In step S300, the first content 12 is supplied to the first supply unit 10. For example, step S300 may include a step of supplying liquefied gas contained in the aerosol container 150a to the first supply unit 10. The step of supplying the first content 12 to the first supply unit 10 in step S300 may be performed after the step of injecting the second content 22 into the second supply unit 20 of step S200.

In step S400, the second content 22 is discharged from the discharge unit 40. In step S400, the second content 22 injected into the second supply unit 20 is discharged from the discharge unit 40 by making an internal pressure of the first supply unit 10 higher than an internal pressure of the second supply unit 20 with the first content 12.

Note that, the discharge apparatus 100 may repeatedly perform step S200 to step S400. That is, the discharge apparatus 100 may intermittently discharge the second content 22 from the discharge unit 40 by repeating step S200 of discharging the second content 22 from the aerosol container 150b by the discharge drive unit 90b and step S300 of discharging the first content 12 from the aerosol container 150a by the discharge drive unit 90a.

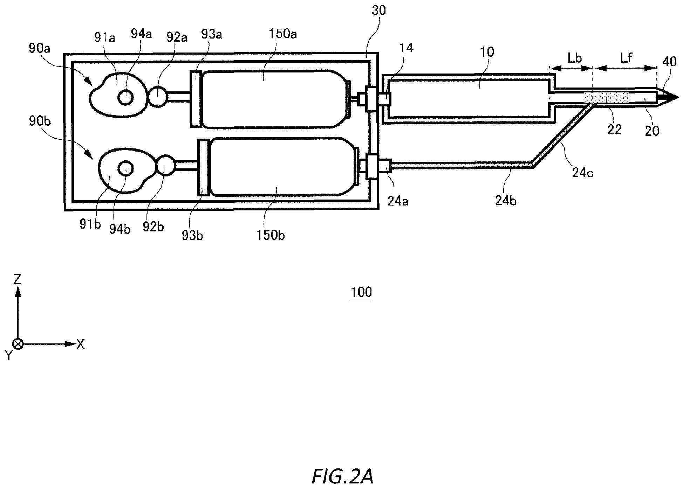

Fig. 2A illustrates an example of operations of the discharge apparatus 100 in step S200. The discharge apparatus 100 of the present example injects the second content 22 into the second supply unit 20 from the second coupling part 24. In the present example, the second content 22 discharged from the aerosol container 150b is injected into the second supply unit 20 via the second coupling part 24.

The second content 22 may be injected such that it fills up the inside of the second supply unit 20 to prevent an escape of the internal pressure by the first content 12. The second content 22 may be injected at a position spaced apart from the first supply unit 10 such that a backflow to the first supply unit 10 is prevented. In addition, the second content 22 may be injected at a position spaced apart from the discharge unit 40 such that a liquid leakage from the discharge unit 40 is prevented.

A distance Lf represents a distance from a coupling position of the second supply unit 20 and the second coupling part 24, to the discharge unit 40, in the X-axis direction. A distance Lb represents a distance from the coupling position of the second supply unit 20 and the second coupling part 24, to the first supply unit 10, in the X-axis direction. In the present example, the distance Lf and the distance Lb are each set to be equal to or greater than a predetermined size according to the material of the second content 22, the structure of the second supply unit 20, and the like. The distance Lf may be longer than the distance Lb.

Note that, the second supply unit 20 and the second coupling part 24 may be removable from the first supply unit 10. In this way, the second supply unit 20 and the second coupling part 24 contaminated by the second content 22 can be easily exchanged. In addition, the second supply unit 20 and the second coupling part 24 having appropriate structures may be selected according to the second content 22.

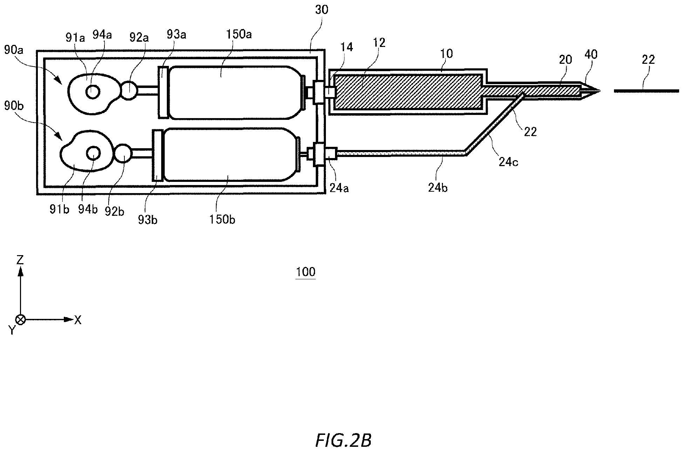

Fig. 2B illustrates an example of operations of the discharge apparatus 100 in step S400. Once the first content 12 is supplied to the first supply unit 10, the second content 22 is discharged from the discharge unit 40. The discharge apparatus 100 of the present example discharges the second content 22 injected into the second supply unit 20 with the first content 12, which is the pressure source. In this way, the inside of the second supply unit 20 is replaced with the vaporized first content 12, and a residual of the second content 22 in the second supply unit 20 will be small. Accordingly, it becomes easier to avoid a liquid dripping at the tip of the discharge unit 40.

Note that, the discharge apparatus 100 may start supply of the first content 12 to the first supply unit 10 while the second content 22 is being injected into the second supply unit 20. In this way, it is possible to start applying a pressure while the second content 22 is being injected into the second supply unit 20, and the second content 22 can be prevented from flowing into the first supply unit 10 side.

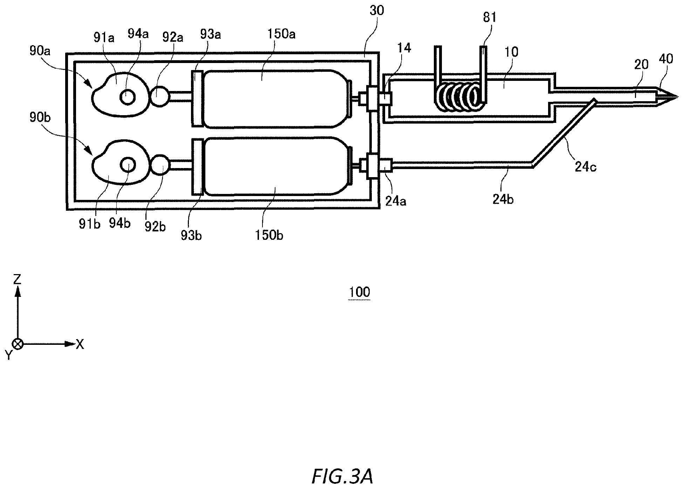

Fig. 3A illustrates a modification example of the configuration of the discharge apparatus 100. The discharge apparatus 100 of the present example includes a temperature adjusting unit 81.

The temperature adjusting unit 81 is provided for the first supply unit 10, and it adjusts a temperature inside the first supply unit 10. The temperature adjusting unit 81 promotes vaporization of the first content 12 in the first supply unit 10 by adjusting the temperature of the first supply unit 10. The temperature adjusting unit 81 may perform an adjustment such that the temperature inside the first supply unit 10 becomes constant, or such that the temperature inside the first supply unit 10 is retained at a predetermined range. For example, the temperature adjusting unit 81 is a heater for warming the temperature inside the first supply unit 10. The temperature adjusting unit 81 of the present example is provided inside the first supply unit 10 and directly warms the first content 12, but the present invention is not limited thereto. The temperature adjusting unit 81 may indirectly adjust the temperature of the first content 12 by adjusting the temperature of the first supply unit 10 from the outside of the first supply unit 10.

By providing the temperature adjusting unit 81, the first content 12 can be vaporized at a high speed, and can be discharged at a pressure that is equal to or greater than the internal pressure of the aerosol container 150. By providing the temperature adjusting unit 81, the contents can be stably discharged regardless of an environmental temperature of the discharge apparatus 100. In addition, even when the first supply unit 10 is cooled by a discharge of the aerosol container 150, it becomes easier to achieve stable continuous injections. By providing the temperature adjusting unit 81, it becomes easier to miniaturize the first supply unit 10.

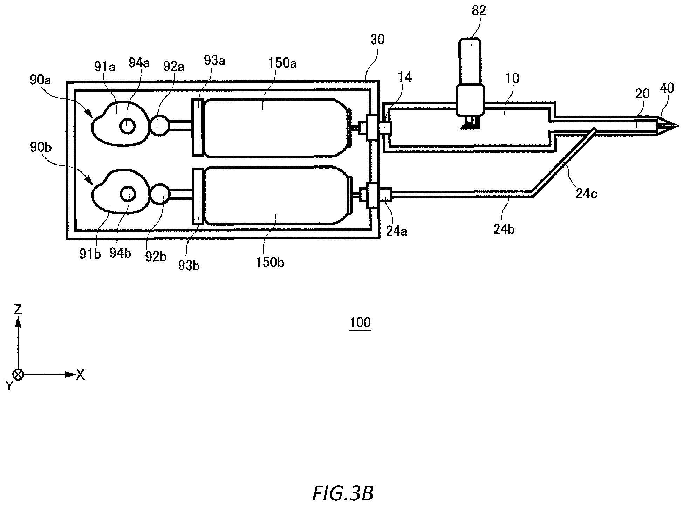

Fig. 3B illustrates a modification example of the configuration of the discharge apparatus 100. The discharge apparatus 100 of the present example includes an ignition unit 82.

The ignition unit 82 ignites the first content 12 in the first supply unit 10. The ignition unit 82 promotes vaporization of the first content 12 in the first supply unit 10 with an ignition of the first content 12. The ignition unit 82 may explode the first content 12 by igniting the first content 12 mixed in an explosion range. The ignition unit 82 may perform the ignition in accordance with the timing of the discharge of the first content 12. For example, the ignition unit 82 performs the ignition after the discharge of the first content 12 has been stopped. By providing the ignition unit 82, the first supply unit 10 can be miniaturized.

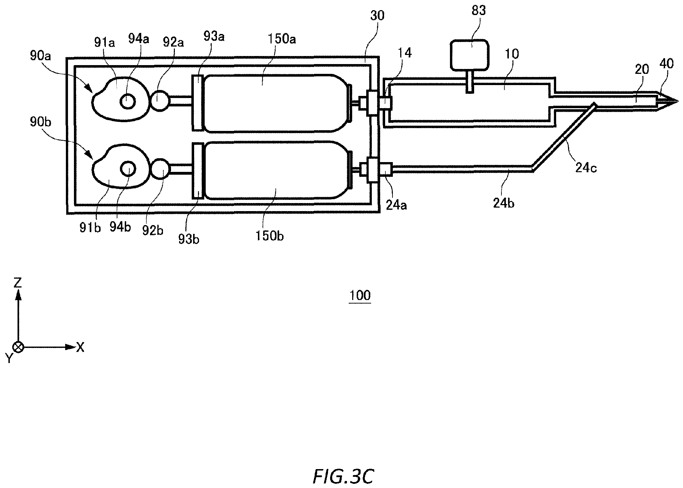

Fig. 3C illustrates a modification example of the configuration of the discharge apparatus 100. The discharge apparatus 100 of the present example includes an oxygen supplying unit 83.

The oxygen supplying unit 83 supplies oxygen to the first content 12 in the first supply unit 10. The oxygen supplying unit 83 promotes vaporization of the first content 12 in the first supply unit 10 by supplying oxygen to the first supply unit 10. The oxygen supplying unit 83 may constantly supply oxygen, or may supply oxygen in advance before the first content 12 is discharged and stop supplying oxygen before the first content 12 is discharged. By providing the oxygen supplying unit 83, the first supply unit 10 can be miniaturized.

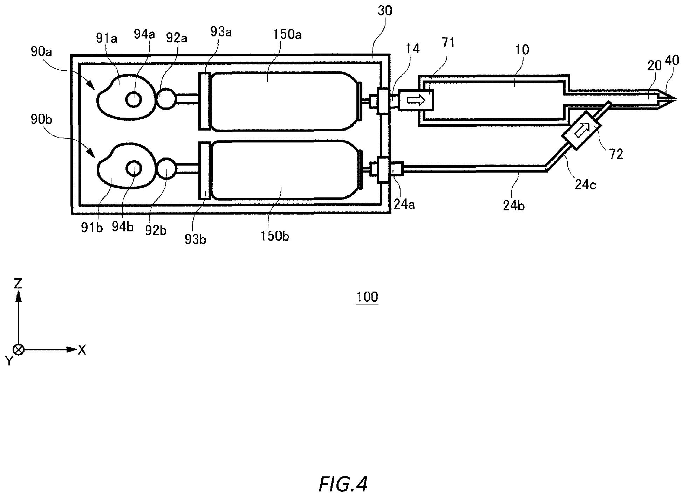

Fig. 4 illustrates a modification example of the configuration of the discharge apparatus 100. The discharge apparatus 100 of the present example includes a first valve 71 and a second valve 72. The discharge apparatus 100 may include either one of the first valve 71 and the second valve 72. The first valve 71 and the second valve 72 may have a function of preventing a backflow of the contents such as a check valve. The first valve 71 and the second valve 72 may have a structure such as a non-return valve, or may have a structure that enables free control of opening and closing with a control unit.

The first valve 71 is provided between the first supply unit 10 and the aerosol container 150a. The first valve 71 of the present example prevents a backflow of the first content 12 from the first supply unit 10 to the first coupling part 14.

The second valve 72 prevents a backflow of the second content 22 from the second supply unit 20 to the second coupling part 24. The second valve 72 of the present example is provided for the second coupling part 24c. The second valve 72 may be provided for the second coupling part 24a or the second coupling part 24b.

When injecting the second content 22 into the second supply unit 20, since the cross-section surface of the discharge port of the discharge unit 40 is small, there is a risk of a liquid leakage due to a backflow to the aerosol container 150a side, or coming off of the aerosol container 150a. The first valve 71 of the present example can avoid issues such as the liquid leakage by preventing a backflow of the second content 22 to the aerosol container 150a.

In addition, also when the first content 12 is discharged from the aerosol container 150a, an internal pressure of the second supply unit 20 may be raised, and the second coupling part 24 may flow back to the second coupling part 24 side or the aerosol container 150b may come off. The second valve 72 of the present example can avoid issues such as the liquid leakage by preventing a backflow of the second content 22 to the aerosol container 150b.

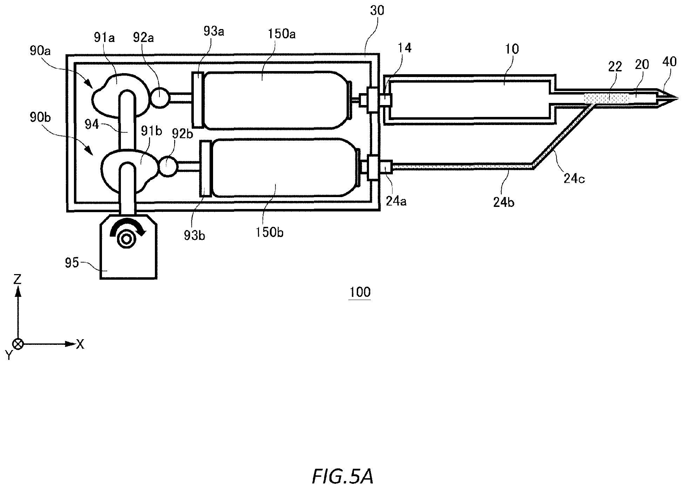

Fig. 5A illustrates a modification example of the configuration of the discharge apparatus 100. The discharge apparatus 100 of the present example includes the cam coupling part 94. The present example shows a state where the second content 22 is discharged from the aerosol container 150b, and the second content 22 is injected into the second supply unit 20.

The cam coupling part 94 couples the cam 91a and the cam 91b. In this way, the discharge apparatus 100 can drive the cam 91a and the cam 91b with one motor.

A driving mechanism 95 is coupled to the discharge drive unit 90a and the discharge drive unit 90b via the cam coupling part 94. The driving mechanism 95 of the present example rotates the cam coupling part 94 in a predetermined direction to change positions of both the aerosol container 150a and the aerosol container 150b. In the present example, angles of the cam 91a and the cam 91b are adjusted such that the contents of the aerosol container 150a and the aerosol container 150b are discharged at different timings. The driving mechanism 95 of the present example functions as a motor for rotating the cam coupling part 94.

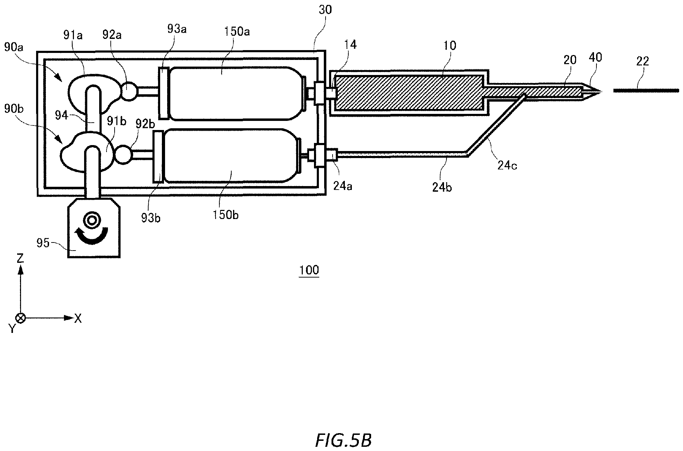

Fig. 5B illustrates a modification example of the configuration of the discharge apparatus 100. The present example shows a state where the second content 22 is discharged from the discharge unit 40 with an internal pressure of the first content 12. In this manner, the discharge apparatus 100 can discharge the first content 12 at a predetermined timing after the second content 22 is discharged. The discharge apparatus 100 of the present example may also control the discharges of the first content 12 and the second content 22 at the same timing as other embodiments. The discharge apparatus 100 of the present example can achieve miniaturization of the containing unit 30 by using a common part for the cam coupling part 94 and the driving mechanism 95.

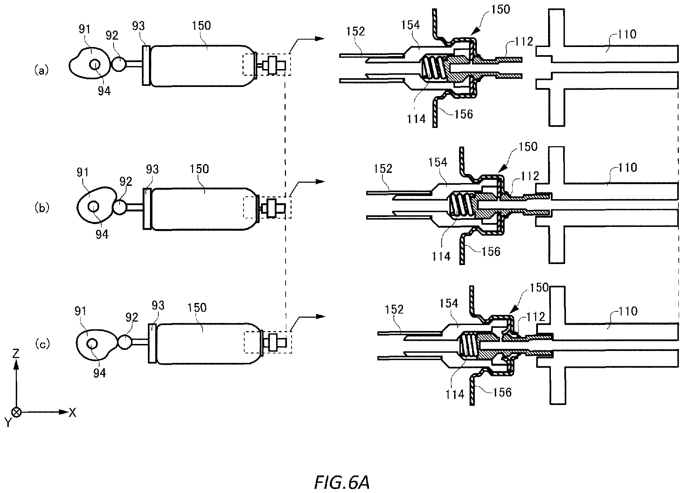

Fig. 6A is a diagram for describing a driving state of the discharge apparatus 100. The present example shows three states which are an avoiding state (a), a standby state (b), and a discharging state (c), according to the angle of the cam 91. In addition, Fig. 6A illustrates an enlarged view of a valve structure of the aerosol container 150. The configuration of the aerosol container 150 of the present example may be applied to both the aerosol container 150a and the aerosol container 150b.

The avoiding state (a) is a state where the cam 91 is set to an avoidance angle, and a contact between a stem 112 and a pressing unit 110 is avoided. The standby state (b) is a state where the cam 91 is set to a standby angle, and the stem 112 and the pressing unit 110 are in contact but the contents are not discharged. The discharging state (c) is a state where the cam 91 is set to a discharge angle, and the contents can be discharged from the aerosol container 150.

The pressing unit 110 presses the stem 112 for opening and closing a valve of the aerosol container 150. The pressing unit 110 may be an actuator for pressing the stem 112. The pressing unit 110 of the present example is provided in direct contact with the stem 112. Note that, the pressing unit 110 may have a flow path corresponding to a discharge direction.

The stem 112 discharges the contents from the aerosol container 150 by being pressed by the pressing unit 110. Although the stem 112 of the present example is built into the aerosol container 150, the stem may also be externally mounted separately from the aerosol container 150.

The aerosol container 150 includes a dip tube 152, a housing 154, and a mounting cup 156. The aerosol container 150 of the present example includes the stem 112 and a stem elastic part 114. In the present example, states before and after opening and closing the valve of the aerosol container 150 are shown.

The stem 112 has a flow path for discharging the contents. The flow path of the stem 112 is connected to the dip tube 152 when the stem 112 is pressed by the pressing unit 110.

The stem elastic part 114 is a spring that extends and contracts according to the operation of the stem 112. The stem elastic part 114 is retained between the stem 112 and the housing 154. When the stem 112 moves to the negative side in the X-axis direction, the stem elastic part 114 is compressed. When the stem 112 moves to the positive side in the X-axis direction, the stem elastic part 114 is elongated.

The dip tube 152 has a flow path extending to the inside of the aerosol container 150 to receive the contents of the aerosol container 150. A length of the dip tube 152 may be changed according to a type of the contents in the aerosol container 150. The dip tube 152 may extend to the vicinity of the bottom of the aerosol container 150.

The housing 154 is coupled to the dip tube 152. The housing 154 accommodates the stem 112 and the stem elastic part 114. The housing 154 has a flow path through which the contents flow from the dip tube 152 to the stem 112.

The mounting cup 156 is provided on an upper surface of the aerosol container 150. The mounting cup 156 fixes the stem 112 and the housing 154 to a body of the aerosol container 150.

The standby state (b) is provided between the avoiding state (a) and the discharging state (c). By providing the standby angle for the cam 91, the stem 112 can be pressed in a level that the valve of the aerosol container 150 does not open, and there will be no gap between the pressing unit 110 and the stem 112. In this way, even if a pressure in the reverse direction is applied to the aerosol container 150, falling off of the can is prevented. That is, force produced by the pressure in the reverse direction can be received in the movable part 93.

On the other hand, when the standby angle is not provided for the cam 91, the stem 112 is not pressed with the pressing unit 110 in the avoidance angle, and there will be a gap between the pressing unit 110 and the stem 112. Accordingly, when a pressure in the reverse direction is applied, there is a risk of a leakage of the contents due to falling off of the aerosol container 150 from the pressing unit 110.

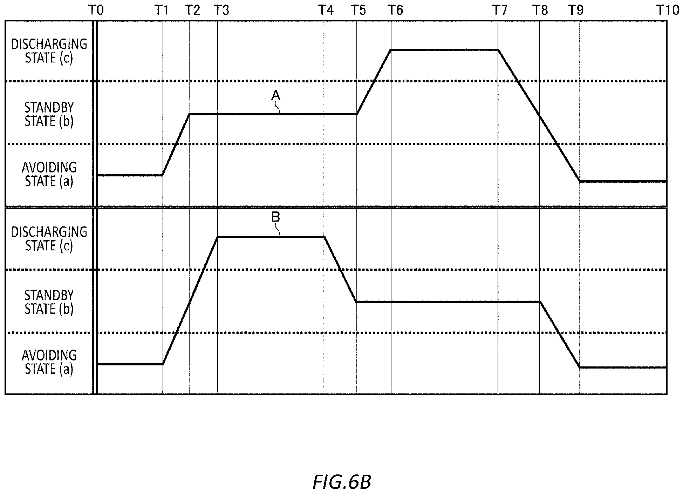

Fig. 6B is a timing diagram showing a driving state of the discharge apparatus 100. Chart A shows a timing diagram of the discharge drive unit 90a which drives the aerosol container 150a. Chart B shows a timing diagram of the discharge drive unit 90b which drives the aerosol container 150b.

At a time T0, both the discharge drive unit 90a and the discharge drive unit 90b are in the avoiding state (a). At a time T1, the discharge drive unit 90a performs transition from the avoiding state (a) to the standby state (b), and sets the aerosol container 150a to the standby state (b). At the time T1, the discharge drive unit 90b performs transition from the avoiding state (a) to the discharging state (c), and sets the aerosol container 150b to the discharging state (c). In this manner, while the aerosol container 150b is being set to the discharging state (c), the aerosol container 150a is set to the standby state (b), and thus an influence such as a liquid leakage in the aerosol container 150a can be avoided.

Subsequently, after the discharge drive unit 90b has set the aerosol container 150b to the standby state (b) at a time T5, the discharge drive unit 90a sets the aerosol container 150a to the discharging state (c) at a time T6. While the aerosol container 150a is being set to the discharging state (c), the aerosol container 150b is set to the standby state (b), and thus an influence such as a liquid leakage in the aerosol container 150b can be avoided. Subsequently, at a time T9, the aerosol container 150a and the aerosol container 150b may be set to the avoiding state (a).

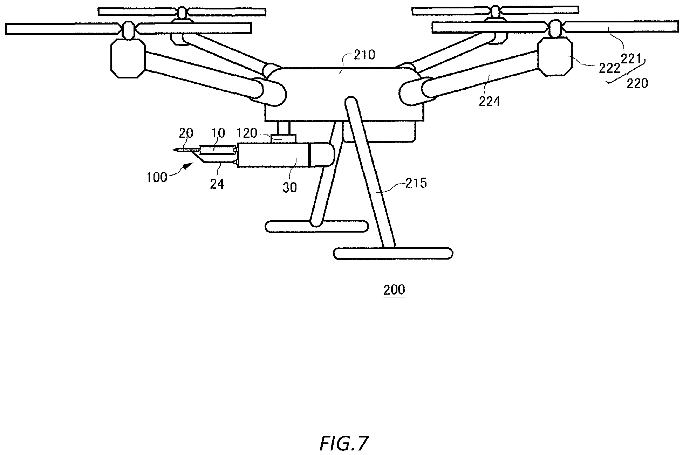

Fig. 7 illustrates an example of a configuration of an unmanned aircraft 200 to which the discharge apparatus 100 is mounted. The unmanned aircraft 200 is a flying vehicle configured to fly in the air. The unmanned aircraft 200 of the present example includes the discharge apparatus 100, a body part 210, and a propelling unit 220. The discharge apparatus 100 of the present example includes an apparatus coupling part 120 for coupling with the unmanned aircraft 200.

The body part 210 stores various control circuits, a power supply, and the like of the unmanned aircraft 200. In addition, the body part 210 may also function as a structure that couples components of the unmanned aircraft 200 with each other. The body part 210 of the present example is coupled to the propelling unit 220. The body part 210 may include a camera.

The propelling unit 220 propels the unmanned aircraft 200. The propelling unit 220 has a rotary blade 221 and a rotation drive unit 222. The unmanned aircraft 200 of the present example includes four propelling units 220. The propelling unit 220 is attached to the body part 210 via the arm part 224. Note that, the unmanned aircraft 200 may be a flying vehicle including fixed blades.

The propelling unit 220 generates propulsion force through the rotation of the rotary blade 221. While four rotary blades 221 are provided around the body part 210, the method of arranging the rotary blades 221 is not limited to the present example. The rotary blade 221 is provided on the tip of the arm part 224 via the rotation drive unit 222.

The rotation drive units 222 have power sources such as motors to drive the rotary blades 221. The rotation drive units 222 may have brake mechanisms for the rotary blades 221. The rotary blade 221 and the rotation drive unit 222 may be attached directly to the body part 210 without the arm part 224.

The arm part 224 is provided so as to extend radially from the body part 210. The unmanned aircraft 200 of the present example includes four arm parts 224 provided corresponding to the four propelling units 220. The arm part 224 may be either fixed or movable. The arm part 224 may have other configurations such as a camera fixed thereto.

The apparatus coupling part 120 couples the discharge apparatus 100 and the unmanned aircraft 200. The apparatus coupling part 120 may be either fixed or movable. The apparatus coupling part 120 may be a gimbal for controlling a position of the discharge apparatus 100 in three-axis directions. The apparatus coupling part 120 may control an orientation of the discharge apparatus 100 in accordance with a discharge direction of the discharge apparatus 100.

Note that, by standardizing the apparatus coupling part 120, an exchange with any discharge apparatus 100 can be made in accordance with the aerosol container 150. This makes it possible to correspond to the aerosol containers 150 of different sizes or types.

A leg part 215 is coupled to the body part 210 and keeps the posture of the unmanned aircraft 200 during landing. The leg part 215 keeps the posture of the unmanned aircraft 200 while the propelling units 220 are turned off. The unmanned aircraft 200 of the present example has two leg parts 215. A camera or the discharge apparatus 100 may be attached to the leg part 215.

The discharge apparatus 100 may perform the discharge of the second content 22 from the discharge unit 40 during an unmanned flight. The discharge apparatus 100 of the present example can discharge the contents continuously and stably even when the unmanned aircraft 200 is flying under low-temperature environment. In addition, since the risks of a liquid dripping and a liquid leakage are reduced in the discharge apparatus 100, a safe flight can be performed even when the discharge apparatus 100 is mounted on the unmanned aircraft 200.

While the present invention has been described by way of the embodiments, the technical scope of the present invention is not limited to the above-described embodiments. It is apparent to persons skilled in the art that various alterations or improvements can be made to the above-described embodiments. It is also apparent from the description of the claims that embodiments added with such alterations or improvements can be included in the technical scope of the present invention.

The operations, procedures, steps, and stages of each process performed by a device, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 first supply unit; 12 first content; 14 first coupling part; 20 second supply unit; 22 second content; 24 second coupling part; 30 containing unit; 40 discharge unit; 71 first valve; 72 second valve; 81 temperature adjusting unit; 82 ignition unit; 83 oxygen supplying unit; 90 discharge drive unit; 91 cam; 92 cam follower; 93 movable part; 94 cam coupling part; 95 driving mechanism; 100 discharge apparatus; 110 pressing unit; 112 stem; 114 stem elastic part; 120 apparatus coupling part; 150 aerosol container; 152 dip tube; 154 housing; 156 mounting cup; 200 unmanned aircraft; 210 body part; 215 leg part; 220 propelling unit; 221 rotary blade; 222 rotation drive unit; 224 arm part.

## Claims

1. A discharge apparatus of aerosol containers, comprising:
a first supply unit to which a first content of a first aerosol container is supplied;
a discharge unit which discharges a second content of a second aerosol container different from the first aerosol container; and
a second supply unit into which the second content is injected, and which is connected between the first supply unit and the discharge unit,
wherein the second content injected into the second supply unit is discharged from the discharge unit by making an internal pressure of the first supply unit higher than an internal pressure of the second supply unit with a supply of the first content.

2. The discharge apparatus according to claim 1, comprising:
a first coupling part which couples the first aerosol container and the first supply unit; and
a second coupling part which couples the second aerosol container and the second supply unit,
wherein the second coupling part injects the second content into the second supply unit from the first supply unit side to the discharge unit side of the second supply unit.

3. The discharge apparatus according to claim 2, comprising a first valve which prevents a backflow of the first content from the first supply unit to the first coupling part.

4. The discharge apparatus according to claim 2 or 3, comprising a second valve which prevents a backflow of the second content from the second supply unit to the second coupling part.

5. The discharge apparatus according to any one of claims 2 to 4, wherein
the second supply unit and the second coupling part are removable from the first supply unit.

6. The discharge apparatus according to any one of claims 1 to 5, wherein
an internal volume of the first supply unit is greater than an internal volume of the second supply unit.

7. The discharge apparatus according to any one of claims 1 to 6, wherein
a cross-sectional area of the first supply unit is larger than a cross-sectional area of the second supply unit.

8. The discharge apparatus according to any one of claims 1 to 7, wherein
the first supply unit is a vaporization chamber for vaporizing the first content.

9. The discharge apparatus according to any one of claims 1 to 8, comprising a temperature adjusting unit which adjusts a temperature of the first supply unit.

10. The discharge apparatus according to any one of claims 1 to 9, comprising an ignition unit which ignites the first content, in the first supply unit.

11. The discharge apparatus according to any one of claims 1 to 10, comprising an oxygen supplying unit which supplies oxygen to the first content, in the first supply unit.

12. The discharge apparatus according to any one of claims 1 to 11, comprising:
a first discharge drive unit which discharges the first content from the first aerosol container; and
a second discharge drive unit which discharges the second content from the second aerosol container.

13. The discharge apparatus according to claim 12, comprising a driving mechanism which is coupled to the first discharge drive unit and the second discharge drive unit,
wherein the first discharge drive unit and the second discharge drive unit discharge contents at a different timing from each other.

14. The discharge apparatus according to claim 12 or 13, wherein
the first discharge drive unit discharges the first content after the second discharge drive unit has discharged the second content.

15. The discharge apparatus according to any one of claims 1 to 14, wherein
the first aerosol container and the second aerosol container are each exchangeable.

16. An unmanned aircraft on which the discharge apparatus according to any one of claims 1 to 15 is mounted.

17. A discharge method, comprising:
providing a first aerosol container which contains a first content and which is connected to a first supply unit;
providing a second aerosol container which contains a second content different from the first content, and which is connected to a second supply unit provided between the first supply unit and a discharge unit;
injecting the second content into the second supply unit;
supplying the first content to the first supply unit; and
discharging the second content injected into the second supply unit from the discharge unit by making an internal pressure of the first supply unit higher than an internal pressure of the second supply unit with the first content.

18. The discharge method according to claim 17, wherein
the supplying the first content to the first supply unit comprises supplying liquefied gas contained in the first aerosol container to the first supply unit.

19. The discharge method according to claim 17 or 18, wherein
the supplying the first content to the first supply unit is performed after the injecting the second content into the second supply unit.

20. The discharge method according to claim 17 or 18, comprising starting a supply of the first content to the first supply unit while the second content is being injected into the second supply unit.

21. The discharge method according to any one of claims 17 to 20, comprising intermittently discharging the second content from the discharge unit by repeating discharging the first content from the first aerosol container by a first discharge drive unit and discharging the second content from the second aerosol container by the second discharge drive unit.

22. The discharge method according to any one of claims 17 to 21, wherein
the discharging the second content from the discharge unit is performed during an unmanned flight by an unmanned aircraft.
